(19) Europäisches Patentamt
European Patent Office
Office européen des brevets

(11) **EP 1 883 246 B1**

(12) **EUROPEAN PATENT SPECIFICATION**

(45) Date of publication and mention
of the grant of the patent:
**21.11.2012 Bulletin 2012/47**

(51) Int Cl.:
**H04N 7/50** (2006.01)     **H04N 7/26** (2006.01)

(21) Application number: **07113420.9**

(22) Date of filing: **30.07.2007**

(54) **Video Encoder with Adaptive Frame Skipping**

Videokodierer mit adaptiver Bildfeldüberspringung

Codeur vidéo avec saut de trames adaptatif

(84) Designated Contracting States:
**DE FR GB**

(30) Priority: **28.07.2006 KR 20060071431**

(43) Date of publication of application:
**30.01.2008 Bulletin 2008/05**

(73) Proprietor: **Samsung Electronics Co., Ltd.
Suwon-si, Gyeonggi-do, 443-742 (KR)**

(72) Inventors:
• **Kim, Bong-Gon,
c/o Samsung Electronics .Co.Ltd.
Gyeonggi-do (KR)**
• **Lee, Sang-Jo
c/o Samsung Electronics Co.Ltd.
Gyeonggi-do (KR)**
• **Joo, Young-Hun
c/o Samsung Electronics. Co.Ltd.
Gyeonggi-do (KR)**

(74) Representative: **Grünecker, Kinkeldey,
Stockmair & Schwanhäusser
Leopoldstrasse 4
80802 München (DE)**

(56) References cited:
**US-A1- 2004 184 534     US-B1- 6 173 012**

• **SONG B ET AL: "Virtual frame rate control for
efficient MPEG-2 video encoding", VISUAL
COMMUNICATIONS AND IMAGE PROCESSING;
8-7-2003 - 11-7-2003; LUGANO,, 8 July 2003
(2003-07-08), XP030080644,**
• **FENG PAN ET AL: "A study of MPEG-4 rate
control scheme and its improvements", IEEE
TRANSACTIONS ON CIRCUITS AND SYSTEMS
FOR VIDEO TECHNOLOGY, IEEE SERVICE
CENTER, PISCATAWAY, NJ, US, vol. 13, no. 5, 1
May 2003 (2003-05-01), pages 440-446,
XP011096753, ISSN: 1051-8215, DOI: DOI:
10.1109/TCSVT.2003.811603**

**EP 1 883 246 B1**

**Description**

The present invention relates to frame coding of video data, and more particularly to an apparatus and a method for skipping some video frames in order to control a bit rate in a video encoder.

It is usual that a video encoder can have a diversity of video sequences, for the video encoder offers flexibility in a coding method. However, a transmission channel in a wireless network environment is accompanied with a number of transmission limiting constraints. For example, there is a constraint in the number of bits (e.g., 384 [kb]) that is unchangedly used in the wireless network environment. Thus, the sending end transmitting frame data in the wireless network environment allows restricts the number of bits, and then performs coding of the frames.

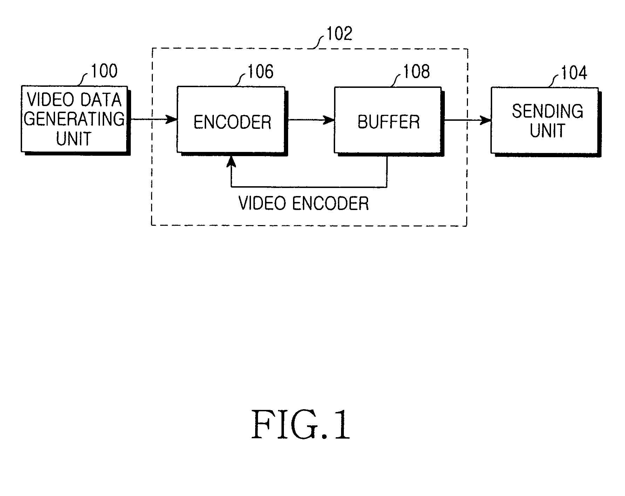

Furthermore, due to constraints, a conventional video encoder is equipped with buffers in order to limit the number of bits that can be sent to the receiving end. FIG.1 is a block diagram illustrating a configuration of an example of conventional video encoders.

With reference to FIG. 1, when video data is created from a video data generating unit 100, the video data is input to a video encoder 102 in the form of a frame, which is quantized and stored, in the form of a Group Of Pictures (GOP). If that happens, the video encoder 102 supplies received frames (hereinafter, referred to as "video data frame (s)") of the video data to an encoder 106 to encode the received frames, which provides the encoded frames to a buffer 108 which store the encoded frames to be sent at a prescribed bit rate to a sending unit 104. This is why, as the video encoder offers flexibility in a coding method of the video encoder 102 as described above, the number of bits can be changeable. Therefore, as described above, a general video encoder 102 is equipped with the buffer 108 to maintain a constant number of bits (Constant Bit Rate (CBR) for each of the encoded frames which are being sent.

This conventional video encoder 102 uses a method for varying a quantization parameter of each video data frame to generate the video data in order to restrict the number of bits as described above. While the method controls the amount of bits of the video data created while generating the video data frame, the number of bits of the video data frame is reduced with the increase of the quantization parameter, whereas the number of bits of the video data frame increases with a decrease of the quantization parameter.

It is natural that there is a limit to the storage capacity of the buffer 108. Thus, in order to prevent the volume of video data frames to be buffered from exceeding the storage capacity of buffer 108, an upper bound is defined in the conventional video encoder 102, so that created bits are controlled to exist in the range of allowable bounds.

Yet, as described above, even though the method for changing the quantization parameter is used, a situation where the number of bits of the encoded frame is not suitable for an environment according to limits currently set, can take place. Namely, even though the quantization parameter is set to the maximum value, a case where the number of bits of the encoded video data frame exceeds the preset upper bound of the buffer 108, can occur. For example, a situation where as the amount of residual data increases following a prediction of the motion in images which are in a wide motion and are complicated, the number of bits exceeding the upper bound can take place. In this case, the conventional video encoder 102 skips the next frame in order to satisfy a limit condition of a constant bit rate. Then, since the next frame has been skipped, generated bits becomes zero when encoding the relevant frame, and therefore, the amount of bits in the buffer is reduced by the amount of bits that are sent.

Nevertheless, in the conventional video encoder 102, in a case where such an over-flow of the storage capacity of the buffer exceeding the upper bound occurs, frame skips are performed according to the amount of bits of the buffer. It is to be noted that reference is made in the following to an I frame and a P frame, where an I frame is an intraframe and a P frame is a predicted frame. Hence, whether the relevant frame is an I frame or a P frame does not have influence on the performance of the skips. It is usual that the I frame and the initial P frame (hereinafter, referred to as "the first P frame") become reference frames of other frames included in a pertinent GOP. Consequently, because the P frame in the beginning part of the GOP, including the I frame, has much influence upon the following other frames, they are very important. Nevertheless, since the conventional video encoder 102 performs the frame skips without consideration of the I frame or first P frame, an important frame such as the I frame or the P frame corresponding to the beginning part of a specific GOP can be skipped as a situation demands. In this case, as an error becomes larger during predicting the motion following a skipped frame, a larger error is propagated , and can have a great effect on the quality of pictures.

Moreover, in a case when there occur many motions unexpectedly and simultaneously, e.g., intense athletic sports, some pieces of frames are assigned a plurality of bits for a specific instant, but additional continuous frame skips can happen. Herein, a part in which there are many motions corresponds to an essential part. In a case where the skip follows one after another, the contents a skipped part can not be perceived, and the consecutive skips degradation of the picture quality of the overall quality of pictures.

US 6,173,012 B1 discloses an MPEG2 conforming encoding apparatus and method wherein a control unit adjusts a target number of bits depending on the result of dividing by at least 2 the error between a target number of bits corresponding to the target bit rate and the number of generated bits required for encoding an immediately preceding image segment group, and controls a quantizing parameter for encoding the image segment group in accordance with the adjusted target number of bits.

US 2004/0184534 discloses a motion video signal encoder maximizes image quality without exceeding transmission bandwidth available to carry the encoded motion video signal by comparing encoded frames of the motion video signal to a desired size of frame. If the size of encoded frames differ from the desired size, quantization is adjusted to produce encoded frames closer in size to the desired size. In addition, a cumulative bandwidth balance records an accumulated amount of available bandwidth. The cumulative bandwidth balance is adjusted as time elapses to add to the available bandwidth and as each frame is encoded to thereby consume bandwidth. If the cumulative bandwidth balance deviates from a predetermined range, quantization is adjusted as needed to either improve image quality to more completely consume available bandwidth or to reduce image quality to thereby consume less bandwidth. Rapid changes in the amount of change or motion in the motion video signal are detected by comparing the amount of change between two consecutive frames and the amount of change between the next two consecutive frames. Quantization is precompensated according to the measured rapid change. Conditional replenishment is improved by dividing macroblocks into quadrants and measuring differences between corresponding quadrants of macroblocks. As a result, sensitivity to changes along edges and corners of macroblocks is increased. In addition, sensitivity to changes in a particular macroblock is increased when an adjacent macroblock contains sufficient change to be encoded and therefore not a candidate for conditional replenishment.

Accordingly, the present invention has been made to solve the above problems occurring in the prior art and provides additional advantages. It is the object of the present invention to provide a video encoder and a method for coding a video data frame for preventing reference frames from being skipped, by efficiently specifying for frames a position in which coding is skipped.

This object is solved by the subject matter of the independent claims.

Preferred embodiments are defined in the dependent claims.

Another aspect of the present invention is to provide a video encoder and a method for coding a video data frame for preventing the overall quality of pictures from being degraded by preventing consecutive skips from occurring while preventing essential reference frames from being skipped.

In one embodiment, there is provided a video encoder according to an embodiment of the present invention, including an encoder for predicting overall coding capacity in a case where received video data frames are encoded, and for encoding video data frames generated by excepting video data frames respectively corresponding to positions in which skips are determined from the received video data frames, and for providing encoded video data frames, a buffer for buffering the encoded video data frames provided from the encoder, an available capacity measuring unit for measuring available capacity of the buffer, an overflow volume measuring unit for inputting information on the overall coding capacity from the encoder, for inputting information on the available capacity from the available capacity measuring unit, for comparing information on the overall coding capacity with information on the available capacity, and for predicting the volume of an overflow, a mean capacity calculating unit for checking information on the capacity of encoded data provided from the encoder to store the checked information, and for calculating mean capacity of the stored coded data and a P frame skip estimating unit for computing the number of coded frames expected to overflow by using the predicted volume of the overflow and the calculated mean capacity, and for determining a position of each of video data frames in which coding is to be skipped according to the computed number of the coded frames expected to overflow.

In another embodiment, there is provided a method for coding a video data frame according to an embodiment of the present invention, including the steps of predicting overall coding capacity in a case when frames of an overall Group Of Pictures (GOP) corresponding to the input video data frames are encoded, choosing any of the input video data frames according to a preset order, checking if a chosen video data frame corresponds to an I frame of the GOP or a first P frame corresponding to the initial P frame of the GOP, and encoding the chosen video data frame if the chosen video data frame corresponds to the I frame or the first P frame; ascertaining if there exists a preset frame skip position in a case when the currently chosen video data frame does not correspond to the I frame or the first P frame as a result of checking the frame, setting a skip position according to mean capacity calculated from P frames of a GOP encoded in advance of the GOP, and to available capacity in a buffer of a video encoder in a case when there exists no preset frame skip position as a result of ascertaining the skip position, and determining if a video data frame chosen to be currently encoded corresponds to the preset frame skip position in a case when there exists the preset frame skip position as a result of ascertaining the skip position, and performing coding of the video data frame chosen to be currently encoded according to a result of the determining.

The above features and advantages of the present invention will be more apparent from the following detailed description taken in conjunction with the accompanying drawings, in which:

FIG. 1 is a block diagram illustrating a configuration of an example of conventional video encoders;
FIG. 2 is a block diagram illustrating a configuration of a video encoder according to an exemplary embodiment of the present invention;
FIG. 3 is a flowchart illustrating an exemplary operation of skipping a video data frame according to currently available capacity of a buffer in a video encoder according to an exemplary embodiment of the present invention;

FIG. 4 is a flowchart illustrating an exemplary operation of encoding a frame and storing information on capacity in a video encoder according to an exemplary embodiment of the present invention;

FIG. 5 is a flowchart illustrating an exemplary operation of skipping a frame and resetting a count value of skips in a video encoder according to an exemplary embodiment of the present invention;

FIG. 6 is a flowchart illustrating an exemplary operation of skipping a frame regardless of a preset skip position according to available capacity of a buffer if a currently chosen frame is a frame just before the last frame in a video encoder according to an exemplary embodiment of the present invention;

FIG. 7 is a flowchart illustrating an exemplary operation of encoding the frame if a currently chosen frame is an I frame or a first P frame according to an exemplary embodiment of the present invention; and

FIG. 8 is a flowchart illustrating an exemplary operation of skipping a frame on such a basis that available capacity of a buffer is enough to accept an I frame and a first P frame in a video encoder, if a currently chosen frame is a frame just before the last frame in a video encoder according to an exemplary embodiment of the present invention.

Hereinafter, embodiments of the present invention will be described with reference to the accompanying drawings. The same elements will be designated by the same reference numerals all through the following description and drawings although they are shown in different drawings. For the purposes of clarity and simplicity, a detailed description of known functions and configurations incorporated herein will be omitted as it may make the subject matter of the present invention unclear.

A basic principle of the present invention is first described. In the present invention, an encoder of a video encoder checks overall capacity of video data frames to be encoded, and predicts the number of the P frames which are to be encoded according to the checked overall capacity by using a mean capacity of P frames extracted from a previous GOP. Then, the number of frames that will be skipped due to an overflow of a buffer is computed from the predicted number of the P frames according to available capacity of the buffer. Next, the position of the frame which will be skipped is set not to be continuous according to the predicted number of the P frames and to the number of frames of the GOP. Furthermore, while coding of the video data frames is being performed, in a case where a video data frame chosen to be currently encoded is arranged in the same position in which the frame to be skipped is arranged, coding of the video data frame is skipped. Herein, the skipped frames are determined from among the video data frames from I frames, which become reference frames of other video data frames, or from P frames, except a first P frame, which becomes a reference frame of another video data frame.

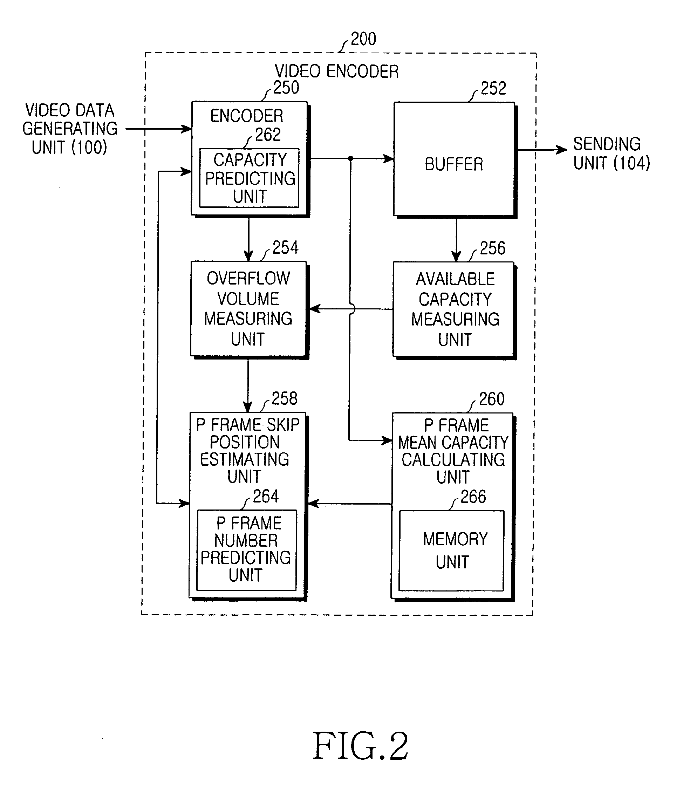

FIG. 2 is a block diagram illustrating a configuration of a video encoder according to an exemplary embodiment of the present invention.

With reference to FIG. 2, a video encoder 200 receives video data consisting of frames from a video data generating unit 100, and includes a capacity predicting unit 262 within an encoder 250, a buffer 252, an available capacity measuring unit 256, an overflow volume measuring unit 254, a P frame mean capacity calculating unit 260, a P frame number predicting unit 264, and a P frame skip position estimating unit 258. The capacity predicting unit 262 checks overall coding capacity in a case where all of the video data frames are decoded. The encoder 250 encodes, according to a preset coding scheme, only video data frames which don't correspond to preset skip positions among the received video data frames. The buffer 252 receives encoded video data frames from the encoder 250, and outputs the prescribed number of bits. The available capacity measuring unit 256 measures available capacity of the buffer. The overflow volume measuring unit 254 receives the measure of available capacity from the available capacity measuring unit 256 and the total coding capacity from the encoder 250, and measures the volume of the overflow, if any. The P frame mean capacity calculating unit 260 checks information on capacity (hereinafter, referred to as "capacity information") of P frames provided from the encoder 250 to store the checked information on capacity of the P frames, and calculates mean capacity of the stored P frames and stores the calculated mean capacity of the stored P frames. The P frame number predicting unit 264 computes the volume of the overflow received from the overflow volume measuring unit 254 according to the mean capacity of the P frames received from the P frame mean capacity calculating unit 260, and measures the number of P frames to be skipped. The P frame skip position estimating unit 258 sets positions of the P frames to be skipped according to the number of the P frames predicted through the P frame number predicting unit 264, and provides the set positions to the encoder 250.

To describe in detail, when the encoder 250 of the video encoder 200 according to an embodiment of the present invention receives the video data frames from the video data generating unit 100, the encoder 250 predicts coding capacity of an overall GOP, including currently received video data frames, through the capacity predicting unit 262. Then, the encoder 250 provides the predicted coding capacity of the overall GOP to the overflow volume measuring unit 254.

Next, in a case when the received video data frame corresponds to an I frame or a first P frame, the encoder 250 performs coding to provide the encoded frames to the buffer 252. However, in a case when the received video data frame does not correspond to the I frame or the first P frame, the encoder 250 checks whether there exists a preset skip position. In a case when there exists the preset skip position, the encoder 250 checks whether a currently chosen video data frame is a frame corresponding to the preset skip position. Herein, the above preset skip position can be set a count value of the skips (hereinafter, referred to as "a skip count value") of the set by the P frame skip position estimating unit 258. Namely, for example, in a case when a skip count value equals '6,' every time one video data frame is encoded, the skip count value decreases by one. When the skip count value equals '0' in the end, coding can be skipped for a video data frame, which is then chosen to be encoded.

Furthermore, in a case where a video data frame which is chosen to be currently encoded corresponds to a P frame just before the last frame of a GOP whose coding is currently performed, it is natural that coding of the video data frame chosen to be currently coded can be skipped according to available capacity of the buffer 252, irrespective of the skip position. This is for preventing the capacity limit of the buffer 252 from causing the I frame or the first P frame of the next GOP to be skipped at the time of coding of an I frame or a first P frame of the next GOP.

After that, the buffer 252 sequentially outputs encoded frames provided from the encoder 250 to a sending unit 104. Next, the available capacity measuring unit 256 continuously checks currently available capacity of the buffer 252 to provide the checked available capacity to the overflow volume measuring unit 254. On this, the overflow volume measuring unit 254 compares coding capacity of the overall GOP measured by the capacity predicting unit 262 of the encoder 250 with available capacity of the buffer 252 measured by the available capacity measuring unit 256. As a result, the overflow volume measuring unit 254 determines if an overflow is generated, and checks the volume of the overflow in the case where the overflow is expected to occur.

Next, the P frame mean capacity calculating unit 260 checks capacity of the P frame provided from the encoder 250 to store the checked capacity of the P frame in a memory unit 266 of the P frame mean capacity calculating unit 260. Furthermore, in a case when coding of one GOP is completed, namely, in a case when the P frame provided from the buffer 252 corresponds to an encoded P frame (hereinafter, referred to as "the last P frame") related to the final video data frame of a specified GOP, if capacity information related to the P frame is stored in the memory unit 266, the P frame mean capacity calculating unit 260 calculates the mean of capacities (number) of P frames of the relevant GOP corresponding to the relevant last P frame, and stores the calculated mean number of the P frames.

After that, the P frame skip position estimating unit 258 receives information on coding capacity of the overall GOP predicted by the capacity predicting unit 262 from the overflow volume measuring unit 254. Then, the P frame skip position estimating unit 258 receives the mean capacity information of the P frames from the P frame mean capacity calculating unit 260. If the mean capacity information of the P frames is input, the P frame skip position estimating unit 258 initializes the preset skip position. If the skip position is set by using the skip count value, the skip count value is initialized. Furthermore, if the capacity of the P frames is the same as capacity according to the mean capacity information, the P frame number predicting unit 264 predicts the total number of the P frames according to the coding capacity of the overall GOP. Namely, for example, in a case where the mean capacity of the P frames equals 359 Kbytes, if the coding capacity of the overall GOP equals 10500 Kbytes, the estimated number of the P frames is '30.'

After that, the P frame skip position estimating unit 258 predicts the number of the P frames according to the volume of the overflow through the P frame number predicting unit 264. Namely, the P frame number predicting unit 264 predicts the P frames corresponding to the volume of the overflow measured by the overflow volume measuring unit 254 among the calculated P frames. Namely, for instance, if the currently available capacity of the buffer equals 9800 Kbytes, the volume of the overflow currently measured by the overflow volume measuring unit 254 becomes 700 Kbytes, and then as described above, if the mean capacity of the P frames equals 350 Kbytes, a calculation can show that two P frames are larger than capacity. Hence, the P frame skip position estimating unit 258 predicts that the number of the P frames which are larger than the capacity among video data frames which have not been encoded yet, will be two (2).

Accordingly, the P frame skip position estimating unit 258 sets a skip position for P frames to be skipped according to the predicted number of the P frames. Namely, for example, in a case where the number of the P frames which are not yet encoded equals '28,' in the above-mentioned case (i.e., the predicted number of the P frames equals '2'), the skip positions of the frames can be set to skip the P frame by one every '14th' P frame on the basis of such an expression that '28' divided by '2' equals '14.' In this case, a skip count value can be set to '14.' In a case where this skip count value is input to the encoder 250, as a currently set skip count value is reduced by one every time one video data frame is encoded, if the skip count value is counted as '0' after all, coding of a relevant video data frame can be skipped. If a count value of encoded frames becomes the same as a value provided from the P frame skip position estimating unit 258, coding of the relevant video data frame can be skipped. In the case where coding of the relevant video data frame is skipped, the encoder 250 initializes the skip count value or the count value of the encoded frames to skip a video data frame arranged in the next skipped position.

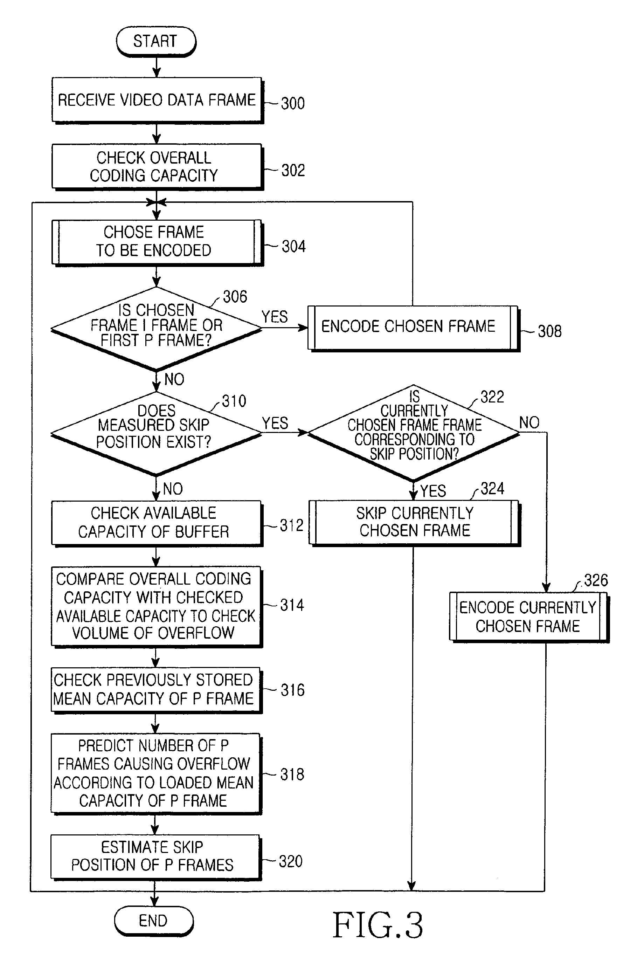

FIG. 3 is a flowchart illustrating an exemplary operation of skipping a video data frame according to currently available capacity of a buffer in a video encoder according to an embodiment of the present invention.

With reference to FIG. 3, when a video data frame is input to the encoder 250 of the video encoder 200, the encoder 250 proceeds to step 300 to receive the video data frame. Then, the encoder proceeds to step 302 to check, from the received video data frame, overall coding capacity in a case where coding of video data frames of an overall GOP has been completed. The encoder 250 proceeds to step 304 to choose a video data frame to be encoded among the received video data frames. Next, the encoder 250 proceeds to step 306 to check if a currently chosen video data frame corresponds to an I frame or the first P frame. Herein, the encoder 250 can determine from information on a header of the received video data frame if the currently chosen video data frame corresponds to the I frame or the first P frame.

If the currently chosen video data frame corresponds to the I frame or the first P frame, the encoder 250 proceeds to step 308 to perform coding of the currently chosen video data frame without condition. With the completion of coding, the encoder 250 outputs the encoded video data frame to the buffer 252.

Still, it goes without saying that currently available capacity of the buffer 252 may not be enough to accept the I frames or the first P frames. Therefore, if the currently available capacity of the buffer 252 is not enough to accept the I frames or the first P frame, coding the currently chosen video data frame corresponding to the I frame or the first P frame is skipped.

Consequently, to keep this case from occurring, in step 304, if the video data frame to be encoded is chosen, it is checked whether the currently chosen video data frame corresponds to a frame just before the last frame, and then coding of the currently chosen video data frame can be skipped according to available capacity of the buffer 252. In this case, if the currently chosen video data frame corresponds to a frame just before the last frame, the video encoder 200 checks currently available capacity of the buffer 252 to ascertain if the currently available capacity of the buffer 252 is enough to accept the subsequent I frames or the first P frames. If the currently available capacity of the buffer 252 is enough to accept the I frames or the first P frame, coding of the currently chosen video data frame is skipped.

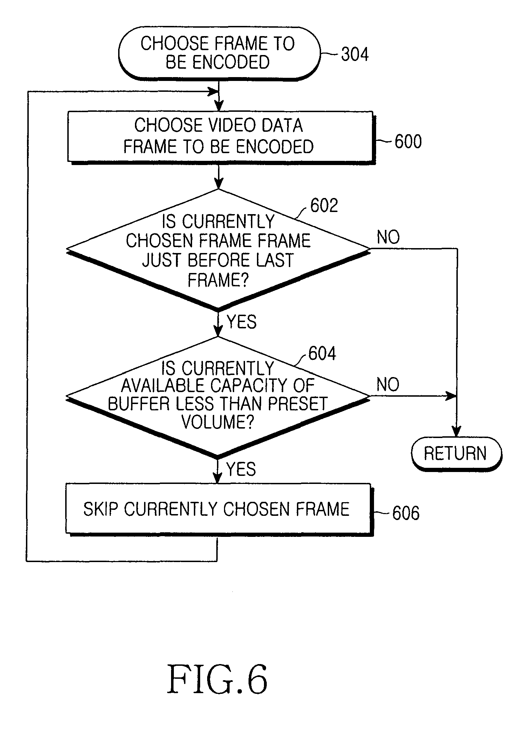

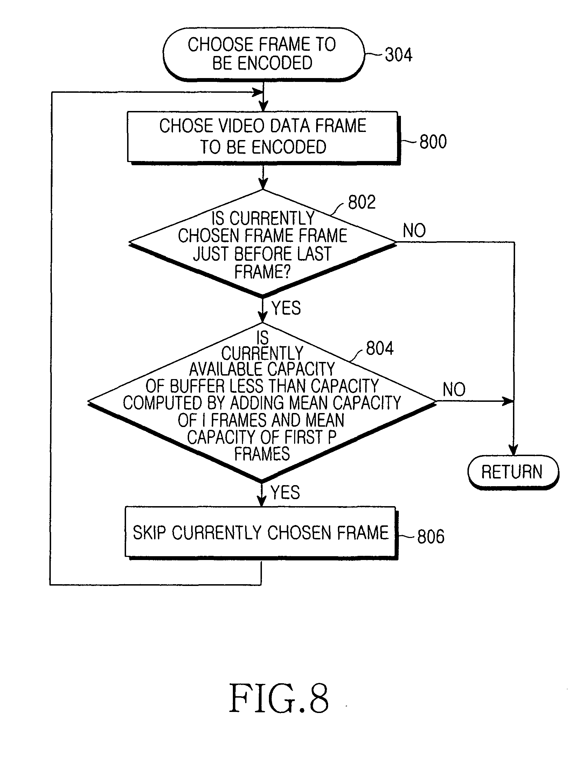

With reference to FIG. 6, a detailed description is given as an example of an operation in a case when a skip of coding of the currently chosen video data frame is performed on such a basis that the available capacity of the buffer 252 is more than the preset volume. Moreover, with reference to FIG. 8, a detailed description will be given as an example of an operation in a case when a skip of coding of the currently chosen video data frame is performed on such a basis that the available capacity of the buffer 252 is more than the mean of capacities given by adding the capacity of the I frames and capacity of the first P frames, wherein the I frames and the first P frames are included in the previous GOP whose coding has already been completed.

Returning to FIG. 3, if the currently chosen video data frame does not correspond to the I frame or the first P frame in step 306, the encoder 250 proceeds to step 310 to check if the skip count value is input from the P frame skip position estimating unit 258, or if there exists a currently measured skip position. In a case when there exists the currently measured skip position, the encoder 250 proceeds to step 322 to check if the currently chosen video data frame is a frame corresponding to a preset skip position. If the currently chosen video data frame is the frame corresponding to the preset skip position, the encoder 250 proceeds to step 324 to skip coding of the relevant chosen frame. On the contrary, if the currently chosen video data frame is not the frame corresponding to the preset skip position, the encoder 250 proceeds to step 326 to perform coding of the currently chosen video data frame. If step 322 or step 324 has been completed, the encoder 250 proceeds to step 304 to choose a video data frame, which will be encoded in the next order.

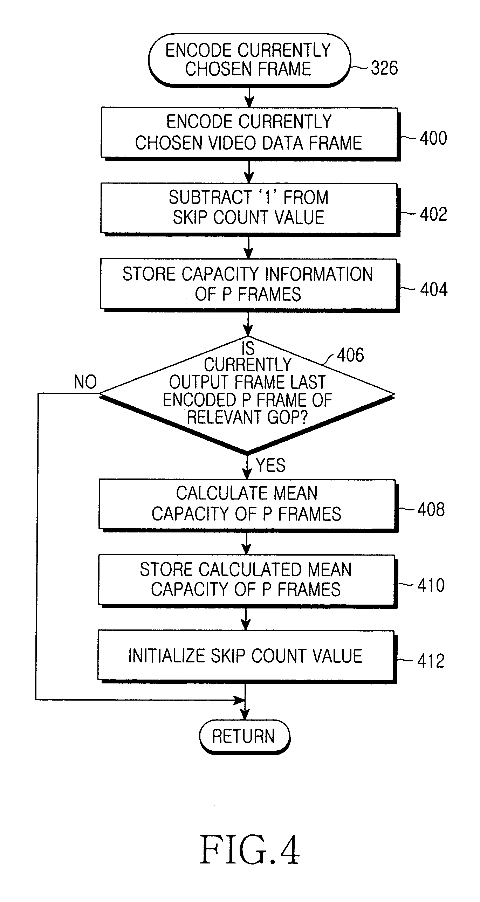

Then, in step 326, the video encoder 200, according to an embodiment of the present invention, checks, through the P frame mean capacity calculating unit 260, capacity of a P frame whose coding has been currently completed, and can further perform a procedure of storing the capacity of the P frame. As described above in detail, that's why the video encoder 200 according to the described embodiment of the present invention, adopts the mean capacity of the P frames of the previous GOP in order to set the position of the frames to be skipped. In a case where a currently encoded P frame corresponds to the last P frame of a GOP which is being currently encoded, a procedure of calculating mean capacity of P frames of a GOP, whose coding has been currently completed, to store the calculated mean capacity following storing capacity information of the P frame, can be further performed. This operation is further described in detail with reference to FIG. 4.

Returning to Figure 3, in step 310, if there exists no skip position which is preset and measured, the video encoder 200, according to an embodiment of the present invention, proceeds to step 312 to check a currently available capacity of the buffer 252 through the available capacity measuring unit 256. Next, if the currently available capacity of the buffer 252 is checked through the available capacity measuring unit 256, the video encoder 200 proceeds to step 314, and compares the predicted overall coding capacity with the available capacity of the buffer 252 to check the volume which is expected to cause an overflow.

After that, the video encoder 200 proceeds to step 316 to load information on the mean capacity of the P frames of the previous GOP stored in the P frame mean capacity calculating unit 260. Next, the video encoder 200 proceeds to step 318 to predict the number of the P frames, which currently causes an overflow, according to the mean capacity of the loaded P frames through the P frame skip position estimating unit 258. Herein, the P frame skip position estimating unit 258 predicts the number of the overall P frames on the basis of the predicted overall coding capacity and of the mean capacity of the loaded P frame, and can calculate the number of P frames according to the volume of the overflow among the predicted P frames. Other than this, in step 314, the P frame skip position estimating unit 258 carries out an immediate operation of the volume of the overflow predicted in step 314 into the mean capacity of the loaded P frame, and predicts the number of the P frames that will cause the overflow.

Furthermore, if the number of the P frames which will cause the overflow is predicted as a result of step 318, the P frame skip position estimating unit 258 carries out an operation of P frames (except for the first P frames) which have not been encoded yet, and of the number of P frames predicted to cause the overflow, and can set a position of those P frames to be skipped. This skip position can be set depending on a skip count value found from Equation 1.

$$SC = Tf / Pf, \qquad\qquad [1]$$

where Skip Count (SC) denotes a skip count value;
Total frame (Tf) denotes the total frame which has not been encoded yet; and
Prediction frame (Pf) denotes the number of P frames expected to cause an overflow.

Namely, for instance, as described in detail, in the case where the number of P frames which have not been yet encoded equals '28' (the number of frames except for an I frame and a first P frame in the case where the total number of frames of a GOP equals '30,' - for the I frame and the first P frame are unconditionally encoded regardless of setting a skip position in the present invention), if Pf equals '2,' SC can be set to '14' given by dividing '28' by '2.' Then, the P frame skip position estimating unit 258 sends the SC to the encoder 250, and then the encoder 250 checks if a video data frame which is chosen to be currently encoded corresponds to a frame for which a coding skip is set according to the input SC. Next, if a relevant video data frame corresponds to the frame for which the coding skip is set, coding of the relevant video data frame is skipped.

Namely, for example, if the SC equals '14,' the encoder 250 skips the video data frame by '1' every 14 video data frames. Consequently, if the number of the video data frames equals '28' except for the I frame and the first P frame, coding of the 14th video data frame (the 14th P frame) and of 28th video data frame (the 28th P frame) can be skipped among the video data frames except for two video data frames which are not continuous to each other, i.e., the I frame and the first P frame.

Accordingly, the video encoder according to an embodiment of the present invention can keep reference frames which are more important than other frames from being skipped, and can prevent the overall quality of pictures from being degraded by preventing consecutive skips from occurring.

As described above, FIG. 4 is a flowchart showing in detail a procedure calculating mean capacity of P frames of a GOP whose coding has been currently completed, and storing the calculated mean capacity after capacity information of a P frame is stored in a case where the P frame, which has been currently encoded, corresponds to the last P frame of a GOP whose coding is currently being encoded. Hereinafter, in a description of FIG. 4, let us assume that a method for setting a position of a frame, in which coding is skipped, for the frame by providing a skip count value from the P frame skip position estimating unit 258 to the encoder 250, is used. Also in the description thereof, let us assume that the encoder 250 subtracts '1' from a currently set skip count value every time one frame is encoded, and thereafter if the skip count value is counted as '0', coding of a relevant video data frame is skipped. However, since the assumptions are just a part of an embodiment of the present invention, setting the skip position of the frame to be encoded by using the skip count value or skipping coding of the frame when the skip count value equals '0' by subtracting '1' from the skip count value, doesn't define the scope of the present invention.

With reference to FIG. 4, in step 322, if a currently chosen video data frame is a frame corresponding to a preset skip position, the encoder 250 of the described embodiment of the present invention proceeds to step 400 to perform coding of the currently chosen video data frame. Then, the encoder 250 proceeds to step 402 to subtract '1' from a skip count value received from the P frame skip position estimating unit 258. If an encoded P frame is output from the encoder 250, the video encoder 200 according to the described embodiment of the present invention checks the capacity of the output P frame through the P frame mean capacity calculating unit 260, and stores the checked the capacity of the output P frame in the memory unit 266 (step 404).

In step 406, the P frame mean capacity calculating unit 260 checks if a P frame provided from the encoder 250 corresponds to a last encoded frame of a pertinent GOP. At this time, in order to check if the P frame provided from the encoder 250 corresponds to the last encoded frame of the pertinent GOP, the P frame mean capacity calculating unit 260 can use not only a method for checking information on a header of a current output frame but also a method for recognizing a P frame, which is currently stored in the memory unit 266, to be the last P frame of a specific GOP in a case where a frame, which is currently provided from the encoder 250, corresponds to an I frame.

At this time, if the currently output P frame is not the last P frame of the specific GOP as a result of checking in step 406, the video encoder 200 proceeds to step 304 (Fig. 3) to choose a video data frame which will be encoded in the next order. Still, if the currently output P frame corresponds to the last P frame of the specific GOP as a result of checking in step 406, the video encoder 200 proceeds to step 408 to calculate, through the P frame mean capacity calculating unit 260, the mean of capacities of P frames which are currently stored in the memory unit 266, and computes the mean capacity of the P frames.

Furthermore, in step 410, the P frame mean capacity calculating unit 260 of the video encoder 200 stores the computed mean capacity of the P frames in the memory unit 266 of the P frame mean capacity calculating unit 260. Next, the P frame mean capacity calculating unit 260 inputs the computed mean capacity of the P frames to the P frame skip position estimating unit 258. In response, on receiving the computed mean capacity of the P frames, the P frame skip position estimating unit 258 initializes a currently set skip count value in step 412. Therefore, if coding of video data frames of a new GOP, the video encoder 200 sets a new skip count value by using mean capacity of I frames and P frames, except a first P frame among video data frames of a previous GOP, and estimates a new skip positions.

Alternatively, a skip count value can be generated not only when coding of all video data frames belonging to one GOP has been completed, but also when a skip of coding of any of video data frames occurs. In this case, when one GOP comes to an end, the P frame mean capacity calculating unit 260 does not calculate mean capacity of P frames of a previous GOP, but stores capacity information of P frames which are currently output from the encoder 250, and then, when a skip of coding is generated, it goes without saying that mean capacity of P frames whose coding have been completed until that point in time can be calculated.

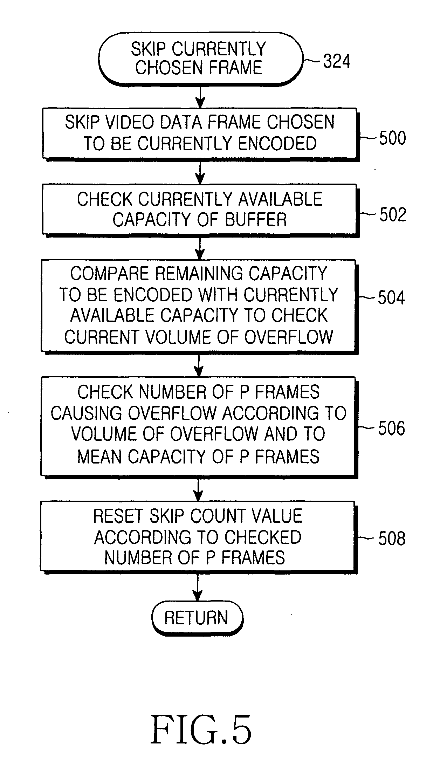

In the case where a skip of coding of a frame occurs, FIG. 5 is a flowchart illustrating in detail a procedure of an operation of resetting a skip position.

With reference to FIG. 5, in step 324 (FIG. 3), the encoder 250 included in the video encoder 200 proceeds to step 500 to skip coding of a video data frame chosen to be currently encoded in a case where the video data frame chosen to be currently encoded is a frame corresponding to a preset skip position. The encoder 250 proceeds to step 502 to check available capacity of the buffer 252. In step 504, the video encoder 200 compares, with available capacity of the buffer 253, the remaining capacity of frames, which will be encoded among currently received video data frames, through the overflow volume measuring unit 254, and checks the volume of an overflow at this point in time.

Next, the video encoder 200 proceeds to step 506 to check, through the P frame skip position estimating unit 258, the number of the P frames which cause an overflow according to the checked volume of the overflow. Herein, mean capacity of the P frames necessary to check the number of the P frames causing the overflow can be mean capacity of P frames whose coding has been completed up to now among P frames of a GOP which is currently being encoded.

Subsequently, the video encoder 200 proceeds to step 508 to reset a skip position according to the checked number of the P frames. Herein, resetting the skip position can be a procedure of resetting the skip count value. Therefore, in this case, if coding of a specified video data frame is skipped, a new skip count value can be reset according to currently available capacity of the buffer 252. Hence, even when capacity at the time of coding of the video data frames is greatly different from mean capacity of previous P frames, which falls short of the initial prediction, the volume of the overflow is more accurately estimated by using the mean capacity of the P frames encoded up to now, and accordingly, the skip position of the P frames can be set.

FIG. 6 is a flowchart illustrating a procedure of an operation in a case of skipping a currently selected video data frame according to a currently available capacity of the buffer 252, by checking if the currently selected video data frame corresponds to a frame just before the last frame in step 304. As described and shown in detail according to the embodiment of the present invention, even though coding of the frames is skipped, in a case when the currently available capacity of the buffer 252 is not enough to accept the I frame and the first P frame, a case where a skip of the I frame or of the first P frame is prevented from taking place. Hence, in this case, the video encoder 200 can further skip another P frame according to available capacity of the buffer 252 regardless of a preset skip position except the last frame among P frames of a GOP which is currently being encoded. That's why it is usual that the last frame becomes a frame corresponding to the skip position according to the preferred embodiment of the present invention.

In this case, if overall coding capacity of a GOP to be encoded is checked in step 302, the encoder 250 of the video encoder 200 proceeds to step 600 to select, in a preset order, video data frames of the GOP to be encoded. Then, the encoder 250 of the video encoder 200 proceeds to step 602 to check if a currently selected video data frame corresponds to a frame just before the last frame among the video data frames of the GOP to be encoded. Furthermore, if the currently selected video data frame is not the frame just before the last frame among the video data frames of the GOP to be encoded, the encoder 250 proceeds to step 310, wherein it is checked whether there exists a currently measured skip position, i.e., for instance, whether there exists a currently set skip count value.

However, if the currently selected video data frame corresponds to the frame just before the last frame among the video data frames of the GOP to be encoded as a result of step 602, the video encoder 200 measures checked available capacity of the buffer 252 through the available capacity measuring unit 256, and checks if the measured available capacity of the buffer 252 is less than the preset volume in step 604. Herein, the volume preset for the available capacity of the buffer 252 can be used as a value resulting from an experiment for optimizing the available capacity of the buffer 252.

Furthermore, if the measured available capacity of the buffer 252 is not less than the preset volume as a result of checking in step 604, the encoder 250 of the video encoder 200 proceeds to step 310 to check if there exists a currently measured skip position. Yet, if the measured available capacity of the buffer 252 is less than the preset volume as a result of checking in step 604, the encoder 250 of the video encoder 200 proceeds to step 606 to skip coding of a video data frame chosen to be currently encoded. Then, the video encoder 200 returns back to step 600 to select a next video data frame for coding.

Meanwhile, with reference to FIG. 6, a description was given to a case where the volume preset for the available capacity of the buffer 252 is predetermined, and the video data frame just before the last frame is skipped in response to the preset volume. It goes without saying that the video data frame just before the last frame can be skipped by comparing capacity of the I frame and the first P frame of the previous GOP, whose coding has been already completed, with the currently available capacity of the buffer 252 without presetting the volume for the available capacity of the buffer 252. In this case, if the I frame and the first P frame are output from the encoder 250, the P frame mean capacity calculating unit 260 checks capacity information of the output I and first P frames, further stores the checked capacity information of the output I and first P frames in memory unit 266 of the P frame mean capacity calculating unit 260, and further calculates mean capacity of the stored I frames and mean capacity of the stored first P frames.

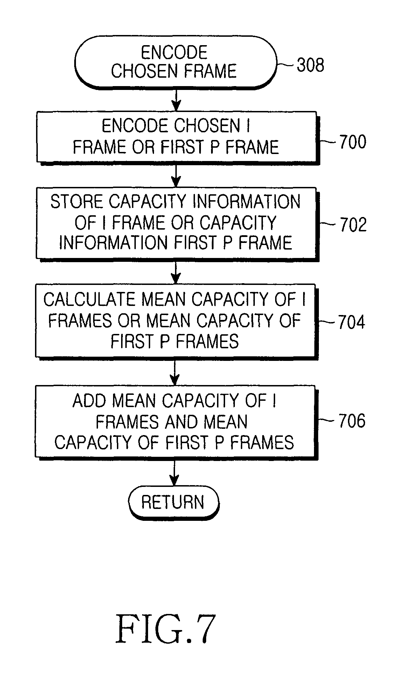

Hereinafter, FIGS. 7 and 8 are flowcharts illustrating operations of skipping coding on such a basis that available capacity of the buffer 252 is enough to accept an I frame and the first P frame, in a case when a currently selected frame corresponds to a frame just before the last frame according to this preferred embodiment of the present invention. Herein, FIG. 7 is a flowchart illustrating a process for storing the capacity of the I and first P frames of a previous GOP in order to compare the capacity of the I and first P frames of the previous GOP with the available capacity of the buffer 252 as described above, and for calculating mean capacity of the stored I and first P frames to store the calculated mean capacity thereof. FIG. 8 is a flowchart illustrating a procedure of an operation for skipping coding of a frame just before the last frame by using the capacity of the I and first P frames or the mean capacity of the I and first P frames, in a case where the capacity of the I and first P frames or the mean capacity of the I and first P frames is computed through the process illustrated in FIG. 7.

Referring to FIG. 7, if a currently selected video data frame corresponds to the I frame or the first P frame, the encoder 250 of the video encoder 200 proceeds to step 700 to encode the currently selected I or first P frame. If the I frame or the first P frame, whose encoding has been completed, is output from the encoder 250, the P frame mean capacity calculating unit 260 proceeds to step 702 to check capacity information of the output I or first P frame, and stores the checked capacity information thereof in the memory unit 266.

On this, the P frame mean capacity calculating unit 260 proceeds to step 704 to calculate mean capacity of each of I frames and first P frames both of which are stored in memory unit 266. Next, if the mean capacity of each of I frames and first P frames is calculated, the P frame mean capacity calculating unit 260 proceeds to step 706 to store, in the memory unit 266, the total of the mean capacities evaluated, by adding the mean capacity of the I frames and the mean capacity of the first P frames. Thereafter, the video encoder 200 proceeds to step 304 to the next video data frame to be encoded.

In this case, the video encoder 200 according to the described embodiment of the present invention is now able to have the total of the mean capacities evaluated by adding the mean capacity of the I frames and the mean capacity of the first P frames. In addition, if a video data frame chosen to be currently encoded corresponds to the frame just before the last frame, coding of the video data frame chosen to be currently encoded is skipped according to the total of the mean capacities and to the currently available capacity of the buffer 252. A flowchart in FIG. 8 that fully illustrates an operation according to an of the present invention, can be applied to this case.

With reference to FIG. 8, if overall coding capacity of a GOP to be encoded is checked in step 304, the encoder 250 of the video encoder 200 proceeds to step 800 to select, in a preset order, a video data frame of a GOP which is just about to be encoded. Then, the encoder 250 of the video encoder 200 proceeds to step 802 to determine if a currently selected video data frame corresponds to a frame just before the last frame among video data frames of the GOP to be encoded. If the currently selected video data frame is not the frame just before the last frame among the video data frames of the GOP to be encoded, the video encoder 200 proceeds to step 310 in which there exists a currently measured skip position, i.e., for example, whether there exists a currently set skip count value, is checked.

On the contrary, if the currently selected video data frame corresponds to the frame just before the last frame among the video data frames of the GOP to be encoded as a result of determining in step 802, the video encoder 200 measures checked available capacity of the buffer 252 through the available capacity measuring unit 256. In step 804, the video encoder 200 determines if the measured available capacity of the buffer 252 is less than the total of the mean capacities evaluated by adding the mean capacity of the I frames and the mean capacity of the first P frames, wherein the total of the mean capacities has been calculated in the procedure illustrated in FIG. 7.

If the measured available capacity of the buffer 252 is not less than the total of the mean capacities as a result of determining in step 804, the encoder 250 of the video encoder 200 proceeds to step 310 to check if there exists a currently measured skip position. On the contrary, if the measured available capacity of the buffer 252 is less than the total of the mean capacities as a result of determining in step 804, the encoder 250 of the video encoder 200 proceeds to step 806 to skip coding of a video data frame chosen to be currently encoded. Thereafter, the encoder 250 of the video encoder 200 returns back to step 800 to select a next video data frame for coding. Consequently, in the present invention, the I frames or the first P frames are skipped is prevented as much as possible from taking place.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. The computer or processor when loaded with the code or having access to the code is represents an apparatus for executing the processing described herein.

The merits and effects of the embodiments, as disclosed in the present invention, are further described as follows.

In the present invention, a position in which coding is skipped is specified for frames, and reference frames more important than other frames are prevented from being skipped. Moreover, while essential reference frames are being prevented from being skipped, consecutive skips are prevented from occurring, and therefore the overall quality of pictures can be prevented from being degraded.

While the invention has been shown and described with reference to a certain preferred embodiment thereof, it will be understood by those skilled in the art that various changes in form and details may be made therein without departing from the scope of the invention. In embodiments of the present invention, an example is given of using a skip count value in order to set a skip position for frames, but it goes without saying that the present invention is not limited to using the skip count value in order to set the skip position. For example, a frame number may be directly selected for the skip position, and then the selected frame number can be input to the encoder 250. In addition, in other embodiments of the present invention, the number of the P frames is predicted by dividing the predicted overall coding capacity by the mean capacity of the P frames following measuring the volume of the overflow, and the number of the P frames which will cause the overflow is predicted by comparing the volume causing the overflow with the predicted number of the P frames. Alternatively, the number of the P frames causing the overflow can be predicted by dividing the measured volume of the overflow by the mean capacity of the P frames if the volume of the overflow is measured. Thus the two method provide for the same effect in that the number of the P frames which will cause the overflow is predicted by dividing the measured volume of the overflow by the mean capacity of the P frames following measuring the volume of the overflow. Therefore, the scope of the present invention is not limited to the described embodiments but defined by the appended claims.

## Claims

1. A video encoder comprising:

   an encoder (250) adapted to predict an overall coding capacity for encoding frames of a group of pictures, GOP, including currently received video data frames, and to encode video data frames generated by excepting video data frames corresponding to positions in which skips are determined from the received video data frames, and to provide encoded video data frames, wherein the positions in which said skips take place are determined not to be continuous and the positions are selected not to coincide with the position of an I-frame or an initial P-frame of the GOP;
   a buffer (252) adapted to buffer the encoded video data frames provided from the encoder (250);
   an available capacity measuring unit (256) adapted to measure available capacity of the buffer (252);
   an overflow volume measuring unit (254) adapted to:

      input information on the overall coding capacity from the encoder (250),
      input information on the available capacity from the available capacity measuring unit (256),
      compare information on the overall coding capacity with information on the available capacity, and predict the volume of an overflow;
      a P-frame mean capacity calculating unit (260) adapted to check information on the capacity of encoded P-frame data provided from the encoder (250) to store the checked information on the capacity thereof, and to calculate a mean capacity of the stored coded P-frame data; and
      a P-frame skip estimating unit (258) adapted to compute the number of coded frames expected to cause overflow by using the predicted volume of the overflow and the calculated mean capacity, and to determine at least one position of each of video data frames in which coding is to be skipped according to the computed number of the coded frames expected to overflow.

**2.** The video encoder as claimed in claim 1, wherein the video data frame corresponding to a position in which the skip is determined comprises:

at least one frame among an I frame and the remaining P frames, except a first P frame corresponding to the initial P frame, from the video data frames.

**3.** The video encoder as claimed in claim 2, wherein the P frame skip estimating unit (258) is adapted to set a value of a skip count for video data frames to be skipped according to the number of encoded frames predicted to cause the overflow.

**4.** The video encoder as claimed in claim 3, wherein the encoder (250) is adapted to recognize a video data frame chosen to be currently encoded to be a frame corresponding to the position in which the skip is determined when the skip count equals '0'.

**5.** The video encoder as claimed in claim 4, wherein when the skip count equals '0,'
the available capacity measuring unit (256) is adapted to check the currently available capacity of the buffer (252);
the overflow volume measuring unit (254) is adapted to compare the overall coding capacity of video data frames to be currently encoded with the currently available capacity of the buffer, and to measure the volume of the overflow; and
the P frame skip estimating unit (258) is adapted to predict the volume of the overflow according to the currently available capacity of the buffer (252) and the video data frames to be currently encoded, and to recalculate a skip position of video data frames to be omitted according to the predicted volume of the overflow and to mean capacity of frames which have been encoded up to now.

**6.** The video encoder as claimed in one of claims 1 to 5, wherein the encoder (250) is adapted to skip coding of the video data frame chosen to be encoded on such a basis that the currently available capacity of the buffer (252) is less than the prescribed volume in case when a position of the video data frame chosen to be encoded within a coding order corresponds to a frame just before the last frame among frames of the GOP.

**7.** The video encoder as claimed in one of claims 1 to 6, wherein the P frame mean capacity calculating unit (260) is adapted to store the capacity of an I frame and capacity of P frames except the first P frame among coding data provided from the encoder, and to calculate capacity of I frame and capacity of P frames except the first P frame in a case when the last P frame of a group of pictures, GOP, to be encoded is output.

**8.** The video encoder as claimed in one of claims 1 to 6, wherein the P frame mean capacity calculating unit (260) is adapted to receive capacity information of an I frame and capacity information of P frames, except the first P frame, among coding data provided from the encoder; to store the received capacity information of an I frame and capacity information of P frames except the first P frame; and to calculate mean capacity of I frame, the first P frame, and other P frames except the first P frame in a case when the last P frame of a group of pictures, GOP, to be encoded is output.

**9.** The video encoder as claimed in claim 8, wherein the encoder (250) is further adapted to skip coding of the video data frame chosen to be encoded if the currently available capacity of the buffer (252) is less than the total of the mean capacities evaluated by adding mean capacity of I frames and mean capacity of the first P frames in case when a position of the video data frame chosen to be encoded within a coding order corresponds to a frame just before the last frame among frames of the GOP.

**10.** A method for coding a video data frame, the method comprising the steps of:

predicting an overall coding capacity for encoding frames of a group of pictures, GOP, including currently input video data frames;
(2) choosing (304) any of the input video data frames according to a preset order coding, checking (306) if a chosen video data frame corresponds to an I frame of the GOP or a first P frame corresponding to the initial P frame of the GOP, and encoding (308) the chosen video data frame if the chosen video data frame corresponds to the I frame or the first P frame;
(3) ascertaining if there exists a preset frame skip position when the currently chosen video data frame does not correspond to the I frame or the first P frame as a result of checking the frame;
(4) setting a skip position according to mean capacity calculated from P frames of a GOP encoded in advance of the GOP, and to available capacity in a buffer of a video encoder in a case when there exists no preset frame skip position as a result of ascertaining the skip position; and

(5) determining (322) if a video data frame chosen to be currently encoded corresponds to the preset frame skip position, and performing coding (326) of the video data frame chosen to be currently encoded according to a result of the determining,

wherein step (4) comprises the steps of:

checking available capacity of the buffer;
comparing the checked available capacity of the buffer with said overall coding capacity to predict the volume expected to cause an overflow;
predicting the number of encoded frames expected to cause overflow according to the volume of the overflow by using said mean capacity; and
carrying an operation of the number of video data frames which have not been encoded carrying an operation of the number of video data frames which have not been encoded yet and of the number of frames expected to cause the predicted overflow, and setting a position of frames to be skipped such that the position of the frames which will be skipped is set not to be continuous.

11. The method as claimed in claim 10, wherein step (5) comprises the steps of:

(5-1) determining if a video data frame chosen to be currently encoded is a frame corresponding to the preset frame skip position in a case when there exists the preset frame skip position as a result of ascertaining the skip position;
(5-2) encoding the video data frame chosen to be currently encoded if the video data frame chosen to be currently encoded is not the frame corresponding to the preset frame skip position; and
(5-3) skipping coding of the video data frame chosen to be currently encoded if the video data frame chosen to be currently encoded is the frame corresponding to the preset frame skip position.

12. The method as claimed in claim 11, wherein step (5-2) comprises the steps of:

encoding the currently chosen video data frame;
checking capacity of the encoded video data frame to store the checked capacity of the encoded video data frame; and
checking if a currently encoded video data frame is a frame which has been lastly encoded among video data frames of a GOP corresponding to the received video data frames;
calculating the mean from encoded capacities of the stored video data frames if the currently encoded video data frame is the frame which has been lastly encoded among the video data frames of the GOP corresponding to the received video data frames as a result of checking the encoded frame; and
storing the calculated mean, and setting a new frame skip position by using the stored mean.

13. The method as claimed in claim 11, wherein step (5-2) comprises the steps of:

encoding the currently chosen video data frame;
checking capacity of the encoded video data frame to store the checked capacity of the encoded video data frame; and
calculating a current frame mean related to encoded capacities of video data frames of a GOP which is currently being encoded among encoded capacities of the stored video data frames.

14. The method as claimed in claim 13, wherein step (5-3) comprises the steps of:

skipping coding of the video data frame chosen to be currently encoded;
predicting coding capacity of video data frames whose coding is not performed at present;
checking currently available capacity of the buffer;
comparing the current coding capacity with the checked currently available capacity to predict the volume expected to cause overflow;
predicting the number of encoded frames expected to cause the overflow according to the current volume of the overflow by using the frame mean; and
carrying out an operation of the number of video data frames which have not been encoded yet and of the number of frames expected to cause the overflow, and setting a frame skip position.

15. The method as claimed in one of claims 10 to 14, wherein step (2) comprises the steps of:

(2-1) choosing any of the input video data frames according to a preset order of coding;
(2-2) checking if the chosen video data frame corresponds to an I frame or the first P frame of the GOP; and
(2-3) encoding the chosen video data frame in a case when the chosen video data frame corresponds to the I frame or the first P frame of the GOP.

16. The method as claimed in claim 15, wherein step (2-1) comprises the steps of:

choosing a video data frame to be currently encoded;
checking if the currently chosen video data frame is a frame corresponding to just before the last frame among frames of the GOP;
checking if currently available capacity of the buffer of the video encoder is less than the preset volume in a case when a position of the currently chosen video data frame within a coding order corresponds to a frame just before the last frame among frames of the GOP; and
skipping coding of the currently chosen video data frame if the currently available capacity of the buffer is less than the preset volume.

17. The method as claimed in claim 15, wherein step (2-3) comprises the steps of:

encoding a currently chosen video data frame if the currently chosen video data frame corresponds to an I frame or the first P frame;
storing, in a capacity value of the encoded video data frame, capacity information of the I frame or capacity information of the P frame on such a basis that the encoded video data frame corresponds to the I frame or the first P frame;
calculating the mean of the total of capacities evaluated by taking the mean of adding capacities included in capacity information of the I frames and in capacity information of the P frames; and
storing the mean of the total of capacities.

18. The method as claimed in claim 17, wherein step (2-1) comprises the steps of:

choosing a video data frame to be currently encoded;
checking if a position of the currently chosen video data frame within a coding order corresponds to a frame just before the last frame among frames of the GOP;
checking if currently available capacity of the buffer of the video encoder is less than the mean of the total of capacities in a case when the currently chosen video data frame corresponds to the frame just before the last frame; and
skipping coding of the currently chosen video data frame if currently available capacity of the buffer of the video encoder is less than the mean of the total of capacities.

**Patentansprüche**

1. Video-Codiervorrichtung, die umfasst:

eine Codiereinrichtung (250), die so eingerichtet ist, dass sie eine Gesamt-Codierkapazität zum Codieren von Frames einer Bildgruppe (group of pictures) einschließlich aktuell empfangener Videodaten-Frames vorhersagt und Videodaten-Frames codiert, die generiert werden, indem Videodaten-Frames, die Positionen entsprechen, an denen Sprünge bestimmt werden, aus den empfangenen Videodaten-Frames ausgeschlossen werden, und so eingerichtet ist, dass sie codierte Videodaten-Frames bereitstellt, wobei die Positionen, an denen Sprünge stattfinden, so bestimmt werden, dass sie nicht kontinuierlich sind, und die Positionen so ausgewählt werden, dass sie nicht mit den Positionen eines I-Frame oder eines Anfangs-P-Frame der Bildgruppe übereinstimmen;
einen Puffer (252), der so eingerichtet ist, dass er die von der Codiereinrichtung (250) bereitgestellten codierten Videodaten-Frames puffert;
eine Einheit (256) zum Messen verfügbarer Kapazität, die so eingerichtet ist, dass sie verfügbare Kapazität des Puffers (252) misst;

eine Einheit (254) zum Messen eines Überlauf-Volumens, die so eingerichtet ist, dass sie:

Informationen über die Gesamt-Codierkapazität von der Codiereinrichtung (250) als Eingang empfängt,
Informationen über die verfügbare Kapazität von der Einheit (256) zum Messen verfügbarer Kapazität als Eingang empfängt,
Informationen über die Gesamt-Codierkapazität mit Informationen über die verfügbare Kapazität vergleicht; und
das Volumen eines Überlaufs vorhersagt;
eine Einheit (260) zum Berechnen einer P-Frame-Durchschnittskapazität, die so eingerichtet ist, dass sie Informationen über die Kapazität von der Codiereinrichtung (250) bereitgestellter codierter P-Frame-Daten prüft, um die geprüften Informationen über deren Kapazität zu speichern, und dass sie eine Durchschnittskapazität der gespeicherten codierten P-Frame-Daten berechnet; und
eine Einheit (258) zum Schätzen eines P-Frame-Sprungs, die so eingerichtet ist, dass sie die Anzahl codierter Frames, für die zu erwarten ist, dass sie Überlauf verursachen, unter Verwendung des vorhergesagten Volumens des Überlaufs und der berechneten Durchschnittskapazität berechnet und wenigstens eine Position aller Videodaten-Frames, in denen Codieren zu überspringen ist, gemäß der berechneten Anzahl codierter Frames bestimmt, für die Überlauf erwartet wird.

2. Video-Codiervorrichtung nach Anspruch 1, wobei der Videodaten-Frame, der einer Position entspricht, an der der Sprung bestimmt wird, umfasst:

wenigstens einen Frame von einem I-Frame und den verbleibenden P-Frames mit Ausnahme eines ersten P-Frame, der dem Anfangs-P-Frame entspricht, aus den Videodaten-Frames.

3. Video-Codiervorrichtung nach Anspruch 2, wobei die Einheit (258) zum Schätzen eines P-Frame-Sprungs so eingerichtet ist, dass sie einen Wert eines Sprung-Zählwertes für zu überspringende Videodaten-Frames gemäß der Anzahl codierter Frames festlegt, für die vorhergesagt wird, dass sie den Überlauf verursachen.

4. Video-Codiervorrichtung nach Anspruch 3, wobei die Codiereinrichtung (250) so eingerichtet ist, dass sie einen aktuell zum Codieren ausgewählten Videodaten-Frame als einen Frame erkennt, der der Position entspricht, an der der Sprung festgestellt wird, wenn der Sprung-Zählwert gleich Null ist.

5. Video-Codiervorrichtung nach Anspruch 4, wobei, wenn der Sprung-Zählwert gleich Null ist,
die Einheit (256) zum Messen verfügbarer Kapazität so eingerichtet ist, dass sie die aktuell verfügbare Kapazität des Puffers (252) prüft;
die Einheit (254) zum Messen eines Überlauf-Volumens so eingerichtet ist, dass sie die Gesamt-Codierkapazität aktuell zu codierender Videodaten-Frames mit der aktuell verfügbaren Kapazität des Puffers vergleicht und das Volumen des Überlaufs misst;
die Einheit (258) zum Schätzen eines P-Frame-Sprungs so eingerichtet ist, dass sie das Volumen des Überlaufs gemäß der aktuell verfügbaren Kapazität des Puffers (252) und der aktuell zu codierenden Videodaten-Frames vorhersagt und eine Sprung-Position auszulassender Videodaten-Frames gemäß dem vorhergesagten Volumen des Überlaufs und der Durchschnittskapazität der bisher codierten Frames neu berechnet.

6. Video-Codiervorrichtung nach einem der Ansprüche 1 bis 5, wobei die Codiereinrichtung (250) so eingerichtet ist, dass sie Codieren des zum Codieren ausgewählten Videodaten-Frame basierend darauf überspringt, dass die aktuell verfügbare Kapazität des Puffers (252) geringer ist als das vorgeschriebene Volumen, wenn eine Position des zum Codieren ausgewählten Videodaten-Frame innerhalb einer Codier-Reihenfolge einem Frame unmittelbar vor dem letzten Frame von Frames der Bildgruppe entspricht.

7. Video-Codiervorrichtung nach einem der Ansprüche 1 bis 6, wobei die Einheit (260) zum Berechnen einer P-Frame-Durchschnittskapazität so eingerichtet ist, dass sie die Kapazität eines I-Frame und die Kapazität von P-Frames mit Ausnahme des ersten P-Frame von durch die Codiereinrichtung bereitgestellten Codierdaten speichert, und sie Kapazität eines I-Frame und Kapazität von P-Frames mit Ausnahme des ersten P-Frame dann berechnet, wenn der letzte zu codierende P-Frame einer Bildgruppe ausgegeben wird.

8. Video-Codiervorrichtung nach einem der Ansprüche 1 bis 6, wobei die Einheit (260) zum Berechnen einer P-Frame-Durchschnittskapazität so eingerichtet ist, dass sie Kapazitäts-Informationen eines I-Frame und Kapazitäts-Informationen von P-Frames mit Ausnahme des ersten P-Frame von durch die Codiereinrichtung bereitgestellten Codierdaten empfängt, die empfangenen Kapazitäts-Informationen eines I-Frame und Kapazitäts-Informationen von P-Frames mit Ausnahme des ersten P-Frame speichert und die Durchschnittskapazität eines I-Frame, des ersten P-Frame und anderer P-Frames mit Ausnahme des ersten P-Frame dann berechnet, wenn der letzte zu codierende P-Frame einer Bildgruppe ausgegeben wird.

**9.** Video-Codiervorrichtung nach Anspruch 8, wobei die Codiereinrichtung (250) des Weiteren so eingerichtet ist, dass sie Codieren des zum Codieren ausgewählten Videodaten-Frame überspringt, wenn die aktuell verfügbare Kapazität des Puffers (252) geringer ist als die Gesamtheit der Durchschnittskapazitäten, die bewertet wird, indem die Durchschnittskapazität von I-Frames und die Durchschnittskapazität der ersten P-Frames addiert werden, wenn eine Position des zum Codieren ausgewählten Videodaten-Frame innerhalb einer Codier-Reihenfolge einem Frame unmittelbar vor dem letzten Frame von Frames der Bildgruppe entspricht.

**10.** Verfahren zum Codieren eines Videodaten-Frame, wobei das Verfahren die folgenden Schritte umfasst:

1) Vorhersagen einer Gesamt-Codierkapazität zum Codieren von Frames einer Bildgruppe (group of pictures) einschließlich aktuell eingegebener Videodaten-Frames;
2) Auswählen (304) eines beliebigen der eingegebenen Videodaten-Frames gemäß einer vorgegebenen Codier-Reihenfolge, Prüfen (306), ob ein ausgewählter Videodaten-Frame einem I-Frame der Bildgruppe oder einem ersten P-Frame entspricht, der dem Anfangs-P-Frame der Bildgruppe entspricht, und Codieren (308) des ausgewählten Videodaten-Frame, wenn der gewählte Videodaten-Frame dem I-Frame oder dem ersten P-Frame entspricht;
3) Ermitteln, ob eine vorgegebene Frame-P-Sprungposition vorhanden ist, wenn Prüfen des Frame ergibt, dass der aktuell gewählte Videodaten-Frame nicht dem I-Frame oder dem ersten P-Frame entspricht;
4) Festlegen einer Sprung-Position gemäß einer Durchschnittskapazität, die aus vor einer Bildgruppe codierten P-Frames der Bildgruppe berechnet wird, und gemäß verfügbarer Kapazität in einem Puffer einer Video-Codiereinrichtung, wenn Ermitteln der Sprungposition ergibt, dass keine vorgegebene Frame-Sprungposition vorhanden ist; und
5) Feststellen (322), ob ein aktuell zum Codieren ausgewählter Videodaten-Frame der vorgegebenen Frame-Sprungposition entspricht, und Durchführen von Codieren (326) des aktuell zum Codieren ausgewählten Videodaten-Frame gemäß einem Ergebnis des Feststellens,

wobei Schritt 4) die folgenden Schritte umfasst:

Prüfen verfügbarer Kapazität des Puffers;
Vergleichen der geprüften verfügbaren Kapazität des Puffers mit der Gesamt-Codierkapazität, um das Volumen vorherzusagen, für das erwartet wird, dass es einen Überlauf verursacht;
Vorhersagen der Anzahl codierter Frames, für die erwartet wird, dass sie Überlauf verursachen, gemäß dem Volumen des Überlaufs unter Verwendung der Durchschnittskapazität; und
Ausführen einer Operation der Anzahl von Videodaten-Frames, die noch nicht codiert worden sind und der Anzahl von Frames, für die erwartet wird, dass sie den vorhergesagten Überlauf verursachen, und Festlegen einer Position zu überspringender Frames so, dass die Position der Frames, die übersprungen werden, so festgelegt ist, dass sie nicht fortlaufend ist.

**11.** Verfahren nach Anspruch 10, wobei Schritt 5) die folgenden Schritte umfasst:

5-1) Feststellen, ob ein aktuell zum Codieren ausgewählter Videodaten-Frame ein Frame ist, der der vorgegebenen Frame-Sprungposition entspricht, wenn Ermitteln der Sprungposition ergibt, dass die vorgegebene Frame-Sprungposition vorhanden ist;
5-2) Codieren des aktuell zum Codieren ausgewählten Videodaten-Frame, wenn der aktuell zum Codieren ausgewählte Videodaten-Frame nicht der Frame ist, der der vorgegebenen Frame-Sprungposition entspricht; und
5-3) Überspringen von Codieren des aktuell zum Codieren ausgewählten Videodaten-Frame, wenn der aktuell zum Codieren ausgewählte Videodaten-Frame der Frame ist, der der vorgegebenen Frame-Sprungposition entspricht.

**12.** Verfahren nach Anspruch 11, wobei Schritt 5-2) die folgenden Schritte umfasst:

Codieren des aktuell ausgewählten Videodaten-Frame;

Prüfen von Kapazität des codierten Videodaten-Frame, um die geprüfte Kapazität des codierten Videodaten-Frame zu speichern; und

Prüfen, ob ein aktuell codierter Videodaten-Frame ein Frame ist, der von den Videodaten-Frames einer den empfangenen Videodaten-Frames entsprechenden Bildgruppe zuletzt codiert worden ist;

Berechnen des Durchschnittswertes aus den codierten Kapazitäten der gespeicherten Videodaten-Frames, wenn das Prüfen des codierten Frame ergibt, dass der aktuell codierte Videodaten-Frame der Frame ist, der von den Videodaten-Frames der den empfangenen Videodaten-Frames entsprechenden Bildgruppe zuletzt codiert worden ist; und

Speichern des berechneten Durchschnittswertes und Festlegen einer neuen Frame-Sprungposition unter Verwendung des gespeicherten Durchschnittswertes.

13. Verfahren nach Anspruch 11, wobei Schritt 5-2) die folgenden Schritte umfasst:

Codieren des aktuell ausgewählten Videodaten-Frame;

Prüfen von Kapazität des codierten Videodaten-Frame, um die geprüfte Kapazität des codierten Videodaten-Frame zu speichern; und

Berechnen eines aktuellen Frame-Durchschnitts bezüglich codierter Kapazitäten von Videodaten-Frames einer aktuell codierten Bildgruppe von codierten Kapazitäten der gespeicherten Videodaten-Frames.

14. Verfahren nach Anspruch 13, wobei Schritt 5-3) die folgenden Schritte umfasst:

Überspringen von Codieren des aktuell zum Codieren ausgewählten Videodaten-Frame;

Vorhersagen von Codierkapazität von Videodaten-Frames, deren Codieren gegenwärtig nicht durchgeführt wird;

Prüfen aktuell verfügbarer Kapazität des Puffers;

Vergleichen der aktuellen Codierkapazität mit der geprüften aktuell verfügbaren Kapazität, um das Volumen vorherzusagen, für das erwartet wird, dass es Überlauf verursacht;

Vorhersagen der Anzahl codierter Frames, für die erwartet wird, dass sie den Überlauf verursachen, gemäß dem aktuellen Volumen des Überlaufs unter Verwendung des Frame-Durchschnitts; und

Ausführen einer Operation der Anzahl von Videodaten-Frames, die noch nicht codiert worden sind und der Anzahl von Frames, für die erwartet wird, dass sie den Überlauf verursachen, und Festlegen einer Frame-Sprungposition.

15. Verfahren nach einem der Ansprüche 10 bis 14, wobei Schritt 2) die folgenden Schritte umfasst:

2-1) Auswählen eines beliebigen der eingegebenen Videodaten-Frames gemäß einer vorgegebenen Codier-Reihenfolge;

2-2) Prüfen, ob der ausgewählte Videodaten-Frame einem I-Frame oder dem ersten P-Frame der Bildgruppe entspricht; und

2-3) Codieren des ausgewählten Videodaten-Frame, wenn der ausgewählte Videodaten-Frame dem I-Frame oder dem ersten P-Frame der Bildgruppe entspricht.

16. Verfahren nach Anspruch 15, wobei Schritt 2-1) die folgenden Schritte umfasst:

Auswählen eines aktuell zu codierenden Videodaten-Frame;

Prüfen, ob der aktuell ausgewählte Videodaten-Frame ein Frame ist, der einem Frame unmittelbar vor dem letzten Frame von Frames der Bildgruppe entspricht;

Prüfen, ob aktuell verfügbare Kapazität des Puffers der Video-Codiervorrichtung geringer ist als das vorgegebene Volumen, wenn eine Position des aktuell ausgewählten Videodaten-Frame innerhalb einer Codier-Reihenfolge einem Frame unmittelbar vor dem letzten Frame von Frames der Bildgruppe entspricht; und

Überspringen von Codieren des aktuell ausgewählten Videodaten-Frame, wenn die aktuell verfügbare Kapazität des Puffers geringer ist als das vorgegebene Volumen.

17. Verfahren nach Anspruch 15, wobei Schritt 2-3) die folgenden Schritte umfasst:

Codieren eines aktuell ausgewählten Videodaten-Frame, wenn der aktuell ausgewählte Videodaten-Frame einem I-Frame oder dem ersten P-Frame entspricht;

Speichern von Kapazitäts-Informationen des I-Frame oder Kapazitäts-Informationen des P-Frame in einem Kapazitätswert des codierten Videodaten-Frame basierend darauf, dass der codierte Videodaten-Frame dem I-Frame oder dem ersten P-Frame entspricht;

Berechnen des Durchschnittswertes der Gesamtheit von Kapazitäten, der bewertet wird, indem der Durchschnittswert addierter Kapazitäten gebildet wird, die in Kapazitäts-Informationen der I-Frames und in Kapazitäts-Informationen der P-Frames enthalten sind; und

Speichern des Durchschnittswertes der Gesamtheit von Kapazitäten.

**18.** Verfahren nach Anspruch 17, wobei Schritt 2-1) die folgenden Schritte umfasst:

Auswählen eines aktuell zu codierenden Videodaten-Frame;

Prüfen, ob eine Position des aktuell ausgewählten Videodaten-Frame innerhalb einer Codier-Reihenfolge einem Frame unmittelbar vor dem letzten Frame von Frames der Bildgruppe entspricht;

Prüfen, ob aktuell verfügbare Kapazität des Puffers der Video-Codiervorrichtung geringer ist als der Durchschnittswert der Gesamtheit von Kapazitäten, wenn der aktuell ausgewählte Videodaten-Frame dem Frame unmittelbar vor dem letzten Frame entspricht; und

Überspringen von Codieren des aktuell ausgewählten Videodaten-Frame, wenn aktuell verfügbare Kapazität des Puffers der Video-Codiervorrichtung geringer ist als der Durchschnittswert der Gesamtheit von Kapazitäten.

## Revendications

**1.** Encodeur vidéo comprenant :

un encodeur (250) adapté pour prédire une capacité de codage générale pour encoder des trames d'un groupe d'images, soit Group Of Pictures, ou GOP, comprenant des trames de données vidéo reçues actuellement, et pour encoder des trames de données vidéo générées en exceptant des trames de données vidéo correspondant à des positions dans lesquelles des sauts sont déterminés à partir des trames de données vidéo reçues, et pour fournir des trames de données vidéo encodées, dans lequel les positions auxquelles lesdits sauts prennent place sont déterminées pour ne pas être continues, et les positions sont sélectionnées pour ne pas coïncider avec la position d'une trame I ou d'une trame P initiale du GOP ;

un tampon (252) adapté pour agir comme tampon pour les trames de données vidéo encodées fournies à partir de l'encodeur (250) ;

une unité de mesure de capacité disponible (256) adaptée pour mesurer la capacité disponible du tampon (252) ;

une unité de mesure de volume de débordement (254), adaptée pour :

entrer de l'information sur la capacité de codage générale de l'encodeur (250),

entrer de l'information sur la capacité disponible de l'unité de mesure de capacité disponible (256),

comparer de l'information sur la capacité de codage générale avec de l'information sur la capacité disponible, et

prédire le volume d'un débordement ;

une unité de calcul de capacité moyenne de trame P (260) adaptée pour vérifier de l'information sur la capacité de données de trame P encodées fournies à partir de l'encodeur (250) pour stocker l'information vérifiée sur sa capacité, et pour calculer une capacité moyenne des données de trame P codées stockées ; et

une unité d'estimation de sauts de trame P (258) adaptée pour calculer le nombre de trames codées dont on s'attend à ce qu'il provoque un débordement en utilisant le volume prédit du débordement et la capacité moyenne calculée, et pour déterminer au moins une position de chacune des trames de données vidéo dans lesquelles un codage doit être sauté conformément au nombre calculé des trames codées dont on s'attend à ce qu'il provoque un débordement.

**2.** Encodeur vidéo selon la revendication 1, dans lequel la trame de données vidéo correspondant à une position dans laquelle le saut est déterminé comprend :

au moins une trame parmi une trame I et les trames P restantes, excepté une première trame P correspondant à la trame P initiale, provenant des trames de données vidéo.

**3.** Encodeur vidéo selon la revendication 2, dans lequel l'unité d'estimation de sauts de trame P (258) est adaptée pour établir une valeur d'un comptage de sauts pour des trames de données vidéo à sauter selon le nombre de trames encodées prédit comme causant le débordement.

**4.** Encodeur vidéo selon la revendication 3, dans lequel l'encodeur (250) est adapté pour reconnaître une trame de données vidéo choisie pour être encodée actuellement comme étant une trame correspondant à la position dans laquelle le saut est déterminé lorsque le comptage de sauts est égal à '0'.

**5.** Encodeur vidéo selon la revendication 4, dans lequel, lorsque le comptage de sauts est égal à '0',
l'unité de mesure de capacité disponible (256) est adaptée pour vérifier la capacité actuellement disponible du tampon (252) ;
l'unité de mesure de volume de débordement (254) est adaptée pour comparer la capacité de codage générale de trames de données vidéo à encoder actuellement avec la capacité actuellement disponible du tampon, et pour mesurer le volume du débordement ; et
l'unité d'estimation de sauts de trame P (258) est adaptée pour prédire le volume du débordement en fonction de la capacité actuellement disponible du tampon (252) et les trames de données vidéo à encoder actuellement, et pour recalculer une position de saut de trames de données vidéo à omettre en fonction du volume prédit du débordement et de la capacité moyenne de trames qui ont été encodées jusqu'à maintenant.

**6.** Encodeur vidéo selon l'une des revendications 1 à 5, dans lequel l'encodeur (250) est adapté pour sauter le codage de la trame de données vidéo choisie pour être encodée de telle sorte que la capacité actuellement disponible du tampon (252) est inférieure au volume prescrit dans le cas où une position de la trame de données vidéo choisie pour être encodée dans un ordre de codage correspond à une trame juste avant la dernière trame parmi des trames du GOP.

**7.** Encodeur vidéo selon l'une des revendications 1 à 6, dans lequel l'unité de calcul de capacité moyenne de trame P (260) est adaptée pour stocker la capacité d'une trame I et la capacité de trames P, sauf la première trame P, parmi des données de codage fournies à partir de l'encodeur, et pour calculer la capacité de trame I et la capacité de trames P, sauf la première trame P, dans le cas où la dernière trame P d'un groupe d'images, GOP, à encoder est sortie.

**8.** Encodeur vidéo selon l'une des revendications 1 à 6, dans lequel l'unité de calcul de capacité moyenne de trame P (260) est adaptée pour recevoir de l'information de capacité d'une trame I et de l'information de capacité de trames P, sauf la première trame P, parmi des données de codage fournies à partir de l'encodeur ; pour stocker l'information de capacité reçue d'une trame I et de l'information de capacité de trames P, sauf la première trame P ; et pour calculer la capacité moyenne de trame I, la première trame P et d'autres trames P, sauf la première trame P, dans le cas où la dernière trame P d'un groupe d'images, GOP, à encoder est sortie.

**9.** Encodeur vidéo selon la revendication 8, dans lequel l'encodeur (250) est en outre adapté pour sauter le codage de la trame de données vidéo choisie pour être encodée si la capacité actuellement disponible du tampon (252) est inférieure au total des capacités moyennes évaluées en additionnant la capacité moyenne de trames I et la capacité moyenne des premières trames P dans le cas où une position de la trame de données vidéo choisie pour être encodée dans un ordre de codage correspond à une trame juste avant la dernière trame parmi des trames du GOP.

**10.** Procédé de codage d'une trame de données vidéo, le procédé comprenant les étapes consistant à :

(1) prédire une capacité de codage générale pour encoder des trames d'un groupe d'images, GOP, comprenant des trames de données vidéo actuellement entrées ;
(2) choisir (304) l'une quelconque des trames de données vidéo entrées en fonction d'un ordre de codage préétabli, vérifier (306) si une trame de données vidéo choisie correspond à une trame I du GOP ou à une première trame P correspondant à la trame P initiale du GOP, et encoder (308) la trame de données vidéo choisie si la trame de données vidéo choisie correspond à la trame I ou à la première trame P ;
(3) déterminer s'il existe une position de saut de trame préétablie lorsque la trame de données vidéo actuellement choisie ne correspond pas à la trame I ou à la première trame P suite à la vérification de la trame.
(4) établir une position de saut en fonction de la capacité moyenne calculée à partir de trames P d'un GOP encodées à l'avance du GOP, et en fonction de la capacité disponible dans un tampon d'un encodeur vidéo dans le cas où il n'existe aucune position de saut de trame préétablie suite à la détermination de la position de saut ; et
(5) déterminer (322) si une trame de données vidéo choisie pour être actuellement encodée correspond à la position de saut de trame préétablie, et mettre en oeuvre un codage (326) de la trame de données vidéo choisie pour être actuellement encodée en fonction d'un résultat de la détermination,

dans lequel l'étape (4) comprend les étapes consistant à :

vérifier la capacité disponible du tampon ;

comparer la capacité disponible vérifiée du tampon avec ladite capacité de codage générale pour prédire le volume dont on s'attend à ce qu'il provoque un débordement ;

prédire le nombre de trames encodées dont on s'attend à ce qu'il provoque un débordement en fonction du volume du débordement en utilisant ladite capacité moyenne ; et

mettre en oeuvre une opération du nombre de trames de données vidéo qui n'ont pas encore été encodées et du nombre de trames dont on s'attend à ce qu'il provoque le débordement prédit, et établir une position de trames à sauter de telle sorte que la position des trames qui seront sautées est déterminée pour qu'elles ne soient pas continues.

11. Procédé selon la revendication 10, dans lequel l'étape (5) comprend les étapes consistant à :

(5-1) déterminer si une trame de données vidéo choisie pour être actuellement encodée est une trame correspondant à la position de saut de trame préétablie, dans le cas où existe la position de saut de trame préétablie suite à la détermination de la position de saut ;

(5-2) encoder la trame de données vidéo choisie pour être actuellement encodée si la trame de données vidéo choisie pour être actuellement encodée n'est pas la trame correspondant à la position de saut de trame préétablie ; et

(5-3) sauter le codage de la trame de données vidéo choisie pour être actuellement encodée si la trame de données vidéo choisie pour être actuellement encodée est la trame correspondant à la position de saut de trame préétablie.

12. Procédé selon la revendication 11, dans lequel l'étape (5-2) comprend les étapes consistant à :

encoder la trame de données vidéo actuellement choisie ;

vérifier la capacité de la trame de données vidéo encodée pour stocker la capacité vérifiée de la trame de données vidéo encodée ; et

vérifier si une trame de données vidéo actuellement encodée est une trame qui a été encodée en dernier lieu parmi des trames de données vidéo d'un GOP correspondant aux trames de données vidéo reçues ;

calculer la moyenne de capacités encodées des trames de données vidéo stockées si la trame de données vidéo actuellement encodée est la trame qui a été encodée en dernier lieu parmi les trames de données vidéo du GOP correspondant aux trames de données vidéo reçues suite à la vérification de la trame encodée ; et

stocker la moyenne calculée, et établir une nouvelle position de saut de trame en utilisant la moyenne stockée.

13. Procédé selon la revendication 11, dans lequel l'étape (5-2) comprend les étapes consistant à :

encoder la trame de données vidéo actuellement choisie ;

vérifier la capacité de la trame de données vidéo encodée pour stocker la capacité vérifiée de la trame de données vidéo encodée ; et

calculer une moyenne de trame actuelle relative aux capacités encodées de trames de données vidéo d'un GOP qui est actuellement en cours de codage parmi des capacités encodées des trames de données vidéo stockées.

14. Procédé selon la revendication 13, dans lequel l'étape (5-3) comprend les étapes consistant à :

sauter le codage de la trame de données vidéo choisie pour être actuellement encodée ;

prédire la capacité de codage de trames de données vidéo dont le codage n'est pas exécuté actuellement ;

vérifier la capacité actuellement disponible du tampon ;

comparer la capacité de codage actuelle avec la capacité actuellement disponible vérifiée pour prédire le volume dont on s'attend à ce qu'il provoque un débordement ;

prédire le nombre de trames encodées dont on s'attend à ce qu'il provoque le débordement en fonction du volume actuel du débordement en utilisant la moyenne de trame ; et

mettre en oeuvre une opération du nombre de trames de données vidéo qui n'ont pas encore été encodées et du nombre de trames dont on s'attend à ce qu'il provoque le débordement, et établir une position de saut de trame.

15. Procédé selon l'une des revendications 10 à 14, dans lequel l'étape (2) comprend les étapes consistant à :

(2-1) choisir l'une quelconque des trames de données vidéo entrées en fonction d'un ordre de codage préétabli ;
(2-2) vérifier si la trame de données vidéo choisie correspond à une trame I ou à la première trame P du GOP ; et
(2-3) encoder la trame de données vidéo choisie dans le cas où la trame de données vidéo choisie correspond à la trame I ou à la première trame P du GOP.

16. Procédé selon la revendication 15, dans lequel l'étape (2-1) comprend les étapes consistant à :

choisir une trame de données vidéo à encoder actuellement ;
vérifier si la trame de données vidéo actuellement choisie est une trame juste avant la dernière trame parmi des trames du GOP ;
vérifier si la capacité actuellement disponible du tampon de l'encodeur vidéo est inférieure au volume préétabli dans le cas où une position de la trame de données vidéo actuellement choisie dans un ordre de codage correspond à une trame juste avant la dernière trame parmi des trames du GOP ; et
sauter le codage de la trame de données vidéo actuellement choisie si la capacité actuellement disponible du tampon est inférieure au volume préétabli.

17. Procédé selon la revendication 15, dans lequel l'étape (2-3) comprend les étapes consistant à :

encoder une trame de données vidéo actuellement choisie si la trame de données vidéo actuellement choisie correspond à une trame I ou à la première trame P ;
stocker, dans une valeur de capacité de la trame de données vidéo encodée, de l'information de capacité de la trame I ou de l'information de capacité de la trame P de telle sorte que la trame de données vidéo encodée correspond à la trame I ou à la première trame P ;
calculer la moyenne du total des capacités évaluée en prenant la moyenne de l'addition de capacités comprises dans de l'information de capacité des trames I et dans de l'information de capacité des trames P ; et
stocker la moyenne du total des capacités.

18. Procédé selon la revendication 17, dans lequel l'étape (2-1) comprend les étapes consistant à :

choisir une trame de données vidéo à encoder actuellement ;
vérifier si une position de la trame de données vidéo actuellement choisie dans un ordre de codage correspond à une trame juste avant la dernière trame parmi des trames du GOP ;
vérifier si la capacité actuellement disponible du tampon de l'encodeur vidéo est inférieure à la moyenne du total des capacités dans le cas où la trame de données vidéo actuellement choisie correspond à la trame juste avant la dernière trame ; et
sauter le codage de la trame de données vidéo actuellement choisie si la capacité actuellement disponible du tampon de l'encodeur vidéo est inférieure à la moyenne du total des capacités.

FIG.1

FIG.2

START

RECEIVE VIDEO DATA FRAME —300

CHECK OVERALL
CODING CAPACITY —302

CHOSE FRAME
TO BE ENCODED —304

306
IS CHOSEN
FRAME I FRAME OR
FIRST P FRAME? ──YES── ENCODE CHOSEN FRAME —308

NO

310
DOES
MEASURED SKIP
POSITION EXIST? ──YES──

322
IS
CURRENTLY
CHOSEN FRAME FRAME
CORRESPONDING TO
SKIP POSITION? ──NO──

NO

YES

CHECK AVAILABLE
CAPACITY OF BUFFER —312

324
SKIP CURRENTLY
CHOSEN FRAME

COMPARE OVERALL CODING
CAPACITY WITH CHECKED
AVAILABLE CAPACITY TO CHECK —314
VOLUME OF OVERFLOW

326
ENCODE CURRENTLY
CHOSEN FRAME

CHECK PREVIOUSLY STORED
MEAN CAPACITY OF P FRAME —316

PREDICT NUMBER OF P
FRAMES CAUSING OVERFLOW
ACCORDING TO LOADED MEAN —318
CAPACITY OF P FRAME

ESTIMATE SKIP
POSITION OF P FRAMES —320

END

FIG.3

23

```
      ┌──────────────────────┐
      │  ENCODE CURRENTLY    │──326
      │  CHOSEN FRAME        │
      └──────────────────────┘
                 │
                 ▼
      ┌──────────────────────┐
      │  ENCODE CURRENTLY    │
      │  CHOSEN VIDEO DATA   │──400
      │  FRAME               │
      └──────────────────────┘
                 │
                 ▼
      ┌──────────────────────┐
      │  SUBTRACT '1' FROM   │──402
      │  SKIP COUNT VALUE    │
      └──────────────────────┘
                 │
                 ▼
      ┌──────────────────────┐
      │ STORE CAPACITY       │
      │ INFORMATION          │──404
      │ OF P FRAMES          │
      └──────────────────────┘
                 │
                 ▼
              ╱      ╲
            ╱   IS     ╲   ─406
    NO    ╱  CURRENTLY   ╲
   ◄─────╱ OUTPUT FRAME   ╲
         ╲ LAST ENCODED    ╱
          ╲ P FRAME OF    ╱
           ╲RELEVANT GOP?╱
              ╲      ╱
                 │ YES
                 ▼
      ┌──────────────────────┐
      │  CALCULATE MEAN      │──408
      │  CAPACITY OF P FRAMES│
      └──────────────────────┘
                 │
                 ▼
      ┌──────────────────────┐
      │ STORE CALCULATED MEAN│──410
      │ CAPACITY OF P FRAMES │
      └──────────────────────┘
                 │
                 ▼
      ┌──────────────────────┐
      │ INITIALIZE SKIP      │──412
      │ COUNT VALUE          │
      └──────────────────────┘
                 │
                 ▼
          ┌────────────┐
          │  RETURN    │
          └────────────┘
```

FIG.4

```
        ╭─────────────────────╮
        │   SKIP CURRENTLY     │──── 324
        │   CHOSEN FRAME       │
        ╰─────────────────────╯
                  │
                  ▼
        ┌─────────────────────┐
        │ SKIP VIDEO DATA FRAME CHOSEN │──── 500
        │  TO BE CURRENTLY ENCODED     │
        └─────────────────────┘
                  │
                  ▼
        ┌─────────────────────┐
        │ CHECK CURRENTLY AVAILABLE │──── 502
        │   CAPACITY OF BUFFER      │
        └─────────────────────┘
                  │
                  ▼
        ┌─────────────────────┐
        │ COMPARE REMAINING CAPACITY   │──── 504
        │ TO BE ENCODED WITH CURRENTLY │
        │ AVAILABLE CAPACITY TO CHECK  │
        │ CURRENT VOLUME OF OVERFLOW   │
        └─────────────────────┘
                  │
                  ▼
        ┌─────────────────────┐
        │ CHECK NUMBER OF P FRAMES     │──── 506
        │ CAUSING OVERFLOW ACCORDING TO│
        │ VOLUME OF OVERFLOW AND TO    │
        │ MEAN CAPACITY OF P FRAMES    │
        └─────────────────────┘
                  │
                  ▼
        ┌─────────────────────┐
        │ RESET SKIP COUNT VALUE   │──── 508
        │ ACCORDING TO CHECKED     │
        │ NUMBER OF P FRAMES       │
        └─────────────────────┘
                  │
                  ▼
            ╭──────────╮
            │  RETURN  │
            ╰──────────╯
```

# FIG.5

CHOOSE FRAME TO
BE ENCODED — 304

CHOOSE VIDEO DATA
FRAME TO BE ENCODED — 600

IS CURRENTLY
CHOSEN FRAME FRAME
JUST BEFORE LAST
FRAME? — 602 — NO

YES

IS CURRENTLY
AVAILABLE CAPACITY OF
BUFFER LESS THAN PRESET
VOLUME? — 604 — NO

RETURN

YES

SKIP CURRENTLY CHOSEN FRAME — 606

# FIG.6

ENCODE
CHOSEN FRAME ~308

↓

ENCODE CHOSEN I
FRAME OR FIRST P FRAME ~700

↓

STORE CAPACITY INFORMATION
OF I FRAME OR CAPACITY
INFORMATION FIRST P FRAME ~702

↓

CALCULATE MEAN CAPACITY OF I
FRAMES OR MEAN CAPACITY OF
FIRST P FRAMES ~704

↓

ADD MEAN CAPACITY OF I
FRAMES AND MEAN
CAPACITY OF FIRST P FRAMES ~706

↓

RETURN

# FIG.7

```
                    ┌─────────────────────┐
                    │   CHOOSE FRAME TO   │─ 304
                    │     BE ENCODED      │
                    └─────────────────────┘
                              │
        ┌─────────────────────▼─────────────────────┐
        │            CHOSE VIDEO DATA FRAME          │─ 800
        │              TO BE ENCODED                 │
        └────────────────────┬───────────────────────┘
                             │
                             ▼           802
                    ╱────────────────╲
                   ╱   IS CURRENTLY    ╲       NO
                  ╱  CHOSEN FRAME FRAME ╲──────────────┐
                  ╲  JUST BEFORE LAST   ╱              │
                   ╲     FRAME?        ╱               │
                    ╲────────────────╱                │
                          │ YES                        │
                          ▼          804               │
                  ╱──────────────────╲                 │
                 ╱        IS           ╲                │
                ╱     CURRENTLY         ╲    NO         │
               ╱  AVAILABLE CAPACITY     ╲──────────────┤
              ╱ OF BUFFER LESS THAN CAPACITY╲            │
              ╲COMPUTED BY ADDING MEAN CAPACITY╱         ▼
               ╲ OF I FRAMES AND MEAN     ╱      ┌───────────┐
                ╲ CAPACITY OF FIRST P    ╱       │  RETURN   │
                 ╲    FRAMES            ╱        └───────────┘
                  ╲──────────────────╱
                          │ YES
        ┌─────────────────▼───────────────────┐
        │  SKIP CURRENTLY CHOSEN FRAME         │─ 806
        └──────────────────────────────────────┘
```

# FIG.8

**EP 1 883 246 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6173012 B1

- US 20040184534 A